# EUROPEAN PATENT APPLICATION

(11) **EP 3 108 746 A1**
(43) Date of publication of application: **28.12.2016**
(21) Application number: 14882615.9
(22) Date of filing: 17.02.2014
(51) Int. Cl.: A01K 61/00, A01K 63/02, A61D 7/04

(54) **METHOD AND DEVICE FOR ANESTHETIZING FISH**

(71) Applicant: Marine Biotechnology Inc., Munakata-shi, Fukuoka 811-3501 (JP)
(72) Inventor: KUGINO Kenji, Nagasaki-shi Nagasaki 850-0931 (JP); KUGINO Mutsuko, Nagasaki-shi Nagasaki 850-0931 (JP); ASAKURA Tomiko, Tokyo 166-0003 (JP)
(74) Representative: Isarpatent
(86) International application number: PCT/JP2014/053673
(87) International publication number: WO 2015/122021

(57) **Abstract**

[Problem] Under an underwater environment containing a high concentration of carbon dioxide having an anesthetic effect, prolonged anesthesia is performed on fish and shellfish in a safe and practically simple manner.

[Solution Means] Fine bubbles containing gaseous oxygen are brought into contact with the surface of a gill epithelial cell membrane of fish and shellfish to produce a partial pressure difference between [gaseous oxygen partial pressure] - [gill capillary dissolved oxygen partial pressure] exceeding a partial pressure difference between [water dissolved oxygen partial pressure] - [gill capillary dissolved oxygen partial pressure], and thus the amount of oxygen taken by a gill thin plate capillary is remarkably increased. Thereby, respiratory failure which is caused under a spontaneous respiratory movement suppressed by anesthesia is avoided, and thus it is possible to perform prolonged carbon dioxide anesthesia under a water temperature (around 20°C) at which normal fish and shellfish are treated.

## Description

### Technical Field

The present invention relates to a method and a device for performing prolonged anesthesia by supplying oxygen to fish and shellfish with fine (micro- and nano- scale) bubbles containing gaseous oxygen in water containing a high concentration of carbon dioxide which has an anesthetic effect on fish and shellfish.

### Background Art

Conventionally, in an aquaculture site of fish or the like, for example, when vaccination for disease prevention is performed or the teeth of tiger puffers are cut so that they are prevented from biting each other, an anesthetic drug is used so as to prevent damage and exhaustion of fish bodies and to tranquilize the fish on which an operation is being performed. At present, an anesthetic drug whose main component is eugenol (4-allyl-2-methoxyphenol) which is one type of food additive is approved as a veterinary drug, is sold (product name: FA100) and is used as an anesthetic drug for fish. However, it is not preferable in terms of environmental protection that when it is used in an aquaculture site or the like, the used anesthetic liquid is discarded into an ocean or a river without being processed. For example, as consumer interest in food safety has grown, the use of an anesthetic drug which may be left within the body of aquaculture fish is now avoided as much as possible, and the Ministry of Agriculture, Forestry and Fisheries of Japan provides guidance for preventing the use of an anesthetic drug 7 days before fish and shellfish are landed, with the result that opportunities to use an anesthetic drug for tranquilizing fish and shellfish are reduced.

As a method for anesthetizing fish without use of an anesthetic drug, a short-term anesthesia technology using carbon dioxide dissolved in water has been conventionally known, and an anesthetic drug for fish has recently been developed whose main raw materials are sodium hydrogen carbonate, succinic acid and a solid accelerator which is formed of a solid carbon dioxide blowing agent made of only raw materials approved as food additives (see Patent Literature 1). Patent Literature 2 discloses a technology which is used together with low-temperature processing on fish and in which in a water tank where a carbon dioxide partial pressure is adjusted to be 55 to 95 mmHg, fish are maintained in an anesthetized state for a long period of time. Furthermore, Patent Literature 3 discloses an ice-cold seawater cooling device for storing and transporting live squid in a low-temperature state, that is, in an ice-cold state.

Although with a prolonged anesthetizing method, a wide range of applications such as an application related to the transport of live fish can be expected by fishery related persons, a conventional prolonged anesthetizing method is based on a method in which the water temperature of all live fish vehicles is lowered, and a live fish transport method using a live fish vehicle having a cooling water tank cannot avoid a cost burden on special vehicle facilities and the risk of dying during transport due to the uncertainty of fish-by-fish low temperature physiological characteristics, with the result that it is disadvantageously impossible to widely utilize the prolonged anesthetizing method as a practical anesthetizing method.

Since it has been known for a long time that carbon dioxide has an anesthetic effect both on terrestrial organisms and on aquatic organisms, it can be said that such a method is an ideal anesthetizing method as an anesthetizing method on living organisms serving as food materials in that no harmful substances are left within living bodies. However, when an anesthetic effect on aquatic organisms is attempted to be obtained, since sudden death occurs within a very short period of time due to respiratory failure, it has been considered that the method using carbon dioxide is utilized as a short-term anesthetizing method which is used for limited applications such as when vaccination for disease prevention is performed and the teeth of tiger puffers are cut so that they are prevented from biting each other (see, for example, Non-Patent Literature 1). On the other hand, as a general perception of persons related to the distribution of fish and shellfish, it is believed that the supply of oxygen to fish and shellfish is sufficient as long as dissolved oxygen (DO) is held to be saturated or to be in a state close thereto, and that oxygen deficiency does not occur as long as dissolved oxygen is saturated even under anesthesia. However, this perception is wrong, and the prolonged anesthesia using carbon dioxide on fish and shellfish has not been successful so far because of this wrong perception.

When anesthesia using carbon dioxide is performed on fish and shellfish (aquatic organisms performing gill respiration) under a water temperature (around 20°C) at which fish and shellfish are treated, since the gill respiratory movement is lowered by anesthesia, the speed of the diffusion movement of oxygen performed between [water dissolved oxygen partial pressure] - [gill capillary dissolved oxygen partial pressure] is reduced, and the amount of oxygen taken by a gill thin plate capillary is lowered. It is inferred that, depending on the degree thereof, even if the individual fish and shellfish are placed in water of saturated dissolved oxygen, the amount of oxygen absorbed from the gills cannot satisfy the amount of oxygen demanded by the individuals. Even in an actual case of the carbon dioxide anesthesia on fish and shellfish, when anesthesia using carbon dioxide is performed on fish and shellfish in water of saturated dissolved oxygen while aeration is being performed, the respiration of all the individuals is stopped in a very short period of time of minutes, and thus they suddenly die without exception. This fact proves that the inference is true. Hence, in order for the respiratory failure of fish and shellfish under the carbon dioxide anesthesia to be prevented, any one of the following two methods needs to be performed: one method is to lower the oxygen demand of the individual itself, and the other method is to realize an oxygen environment which exceeds saturated dissolved oxygen water.

Examples of the method for lowering the oxygen demand of the individual itself includes an artificial hibernation induction method (see Patent Literature 4), a cold carbon dioxide gas anesthetizing method (see Non-Patent Literature 2) under a lower temperature and a more accurate low-temperature anesthetizing method using an anesthetizing device (see Patent Literature 2). However, in these low-temperature anesthetizing methods, an entire day is needed to acclimate fish and shellfish under a low temperature (5°C or less) without the sudden death of fish and shellfish, and a large-scale device and a large amount of power consumption for lowering the temperature including the environment water are inevitable, with the result that the practical applications of the low-temperature anesthetizing methods as the anesthetizing method are significantly limited.

On the other hand, when anesthesia using carbon dioxide is performed on fish and shellfish under a water temperature (around 20°C) at which normal fish and shellfish are treated, even if a device (see Patent Literature 2) is used that previously manufactures carbonated water for anesthesia containing a sufficient concentration of dissolved oxygen and that then constantly supplies fresh carbonated water for anesthesia containing a constant concentration of dissolved carbon dioxide gas and dissolved oxygen to a water tank for anesthesia, it is only possible to perform a short-term anesthesia of about 20 minutes at the maximum. Under anesthesia, even in water of saturated dissolved oxygen, the amount of oxygen absorbed from the gills cannot satisfy the amount of oxygen demanded by the individual fish and shellfish, and thus respiratory failure occurs to fish and shellfish in a very short period of time of minutes, with the result that they suddenly die without exception.

### Citation List

### Patent Literature

Patent Literature 1: Japanese Patent No. 4831409
Patent Literature 2: Japanese Patent No. 4951736
Patent Literature 3: Korean Patent No. 10-0531728
Patent Literature 4: Japanese Patent No. 4332206
Non-Patent Literature 1: "Study of possible applications of carbon dioxide anesthesia to transport of live fish" written by Takeda Tatsuaki et al. , p. 725 - 731, NIPPON SUISAN GAKKAISHI 49(5), 1983
Non-Patent Literature 2: "Applications of cold carbon dioxide gas anesthesia to transport of live fish" written by Manda Hisateru et al., p. 54 - 60, Journal of Japan Society for Research of Freezing and Drying 37, 1991

### Summary of Invention

### Technical Problem

The present invention is made to solve the problems described above in the conventional anesthetizing method, and provides a method and a device for anesthetizing, under an underwater environment containing a high concentration of carbon dioxide capable of producing an anesthetic effect, fish and shellfish for a long period of time in a safe and pragmatic manner.

### Problems to be Solved by the Invention

The principle of anesthesia in the present invention is as follows. In order for prolonged anesthesia using carbon dioxide under a water temperature (around 20°C) for fish and shellfish to be realized, a high-oxygen environment exceeding saturated dissolved oxygen water needs to be provided to fish and shellfish. A respiratory movement lowered by the carbon dioxide anesthesia reduces the diffusion of oxygen caused by a partial pressure difference between [water dissolved oxygen partial pressure] - [gill capillary dissolved oxygen partial pressure], the amount of oxygen taken by a gill thin plate capillary is lowered and thus hypoxemia is produced, with the result that sudden death is induced. In order to prevent this problem, a method for remarkably increasing the diffusion of oxygen in a gill portion is needed, and as a novel method therefor, a method for supplying oxygen to fish and shellfish with fine bubbles containing gaseous oxygen is devised. In other words, this is a method for bringing the fine bubbles containing gaseous oxygen into contact with the gill portion to produce a partial pressure difference between [gaseous oxygen partial pressure] - [gill capillary dissolved oxygen partial pressure] exceeding the partial pressure difference between [water dissolved oxygen partial pressure] - [gill capillary dissolved oxygen partial pressure] and thereby remarkably increasing the amount of oxygen taken by the gill thin plate capillary.

In a first aspect of the present invention, a method for anesthetizing fish and shellfish is provided that includes: a step of generating, in water, a high concentration of carbon dioxide having an anesthetic effect for fish and shellfish as targets; and a step of supplying a fine bubble containing gaseous oxygen into the water.

As the method for generating, in water, the concentration of carbon dioxide producing an anesthetic effect, it is possible to use, for example, a method for supplying dissolved molecules into water and a method for supplying fine bubbles without being limited to a particular method. It is also possible to supply fine bubbles of a mixture gas containing oxygen and carbon dioxide.

The fine bubble containing gaseous oxygen is preferably supplied with a water current so as to make contact with the surface of the gill epithelial cell membrane of fish and shellfish. The fine bubble containing gaseous oxygen preferably has such a size that its position is held without being floated in water. In order to continuously supply oxygen at a stable concentration to the individual fish and shellfish which cannot be moved under anesthesia, the fine bubble preferably has a particle diameter of 1 µm or less without having buoyancy, and furthermore, the mode of the particle diameter is preferably equal to or less than 300 nm. In addition, the fine bubble containing gaseous oxygen is preferably supplied at a density of 40 million pieces/ml or more.

In a second aspect of the present invention, a device for anesthetizing fish and shellfish is provided that includes: a water tank in which the fish and shellfish as targets are stored; a means which supplies carbon dioxide into the water tank; and a means which supplies a fine bubble containing gaseous oxygen into the water tank.

The fish and shellfish in the present invention refers to a concept that includes not only fish but also swimming aquatic organisms such as cephalopods and crustaceans which take oxygen by gill respiration.

### Effects of the Invention

According to the present invention, carbon dioxide is supplied into water to provide a high concentration of carbon dioxide having an anesthetic effect to fish and shellfish as targets, and as a method for solving a problem in which under anesthesia, even in a saturated dissolved oxygen environment, the demand for oxygen in the individual is not satisfied, it is possible to safely perform anesthesia under a normal water temperature (around 20°C) without the sudden death of fish and shellfish by supplying fine bubbles containing gaseous oxygen. Modes for Carrying Out the Invention

An anesthetizing method according to an embodiment of the present invention will be schematically described. In order to continuously and accurately supply, to the gill portion of the individual, carbon dioxide whose concentration is suitable for inducing and maintaining the proper depth of anesthesia (the depth of anesthesia corresponding to the first phase to the second phase in the third period of anesthesia in the general anesthesia of a human = paralyses of a thalamus, a subcortical nuclei and a spinal cord) present in each type of fish and shellfish, an arbitrary high concentration of carbon dioxide is supplied to an entire water tank, and thus anesthesia is induced and maintained. At the same time, in order for oxygen exceeding the amount of oxygen demanded by the individual fish and shellfish to be supplied, fine bubbles containing gaseous oxygen (hereinafter referred to as fine bubbles) are continuously supplied to the gill portion of the individual with a water current so as to make direct contact therewith. In the gill portion in contact with the fine bubbles, the movement of diffusion of oxygen is performed by a partial pressure difference between [gaseous oxygen partial pressure] - [gill capillary dissolved oxygen partial pressure], and thus the amount of oxygen taken from this portion by a gill thin plate capillary is dramatically increased. The amount of oxygen taken by the gill thin plate capillary is increased according to a diffusion coefficient depending on the diameter of the fine bubble in contact with the surface of a membrane of gill epithelial cells, the internal pressure of the bubble and the number of bubbles as a result of a larger number of smaller bubbles making contact with the surface of the membrane of gill epithelial cells, and with this method, it is possible to realize a high oxygen concentration environment exceeding the oxygen demand of the individual under the carbon dioxide anesthesia.

Next, the environment oxygen concentration that can satisfy the amount of oxygen demanded by fish and shellfish under anesthesia will be described. The concentration of oxygen in air is about 21% (atmospheric composition = volume percentage, 78% of nitrogen, 21% of oxygen, 0.93% of argon and about 0.03% of carbon dioxide), and land animals that perform pulmonary respiration receive the supply of oxygen corresponding to the oxygen demand of the individual under the oxygen concentration. When land animals such as humans and livestock are anesthetized, a high concentration of oxygen is inhaled so as to avoid respiratory failure which is a complication of anesthesia, and the concentration of oxygen at that time is adjusted to fall within a range of about 40 to 80%. In other words, a high concentration of oxygen whose concentration is about twice to four times that of normal air breathed by a healthy human is supplied, and thus respiratory failure is avoided which is a complication and which is caused under a spontaneous respiratory movement suppressed by anesthesia. The spontaneous respiratory movement is lowered by the respiratory center suppressed by anesthesia, hypoxemia is produced and the concentration of oxygen in the peripheries of the entire body is lowered, with the result that respiratory failure which is a complication is caused. In order for this to be prevented, the concentration of oxygen inhaled by the lungs is increased to twice to four times to increase a partial pressure difference between [alveolus oxygen partial pressure] - [alveolus capillary oxygen partial pressure], and the amount of oxygen taken into the capillary of the alveolus is raised, with the result that the pulmonary respiration movement whose function is lowered is complemented. A phenomenon which is seen in land animals that perform pulmonary respiration, that is, the fact that it is necessary to supply a high concentration of oxygen whose concentration is several times higher than a normal survival environment under anesthesia is naturally presumed to hold true for fish and shellfish, and if so, it is difficult to perform prolonged anesthesia on fish and cephalopods living in seawater. This is because the concentration of oxygen in a marine surface layer falls within a range of 6 to 7.5 mg/L (85 to 100% of the saturated oxygen concentration) at almost all sites, and a large number of types of fish and shellfish survive in water in which dissolved oxygen is substantially saturated. It is impossible to raise, by any method, the concentration of the dissolved oxygen in water in a state where dissolved oxygen is 100%. Hence, when anesthesia using carbon dioxide is performed under a water temperature (around 20°C) at which normal fish and shellfish are treated, hypoxemia is produced in a very short period of time of minutes by a respiration movement suppressed by anesthesia and a respiratory failure occurs to cause sudden death. In order to prevent this, it is necessary to provide an oxygen concentration environment whose concentration is at least several times higher than the normal survival environment to fish and shellfish under anesthesia.

Next, the diameter and the density of the fine bubble for providing a high oxygen concentration environment to fish and shellfish will be described. The magnitude of the buoyancy of bubbles present in water is determined by the diameter thereof, and it is reflected in the speed at which the bubbles are moved upward in water. The speed at which bubbles are moved upward in water depends on liquid properties, and in water, the diameter is about 100 µm, and the Reynolds number Re is substantially 1. Furthermore, when Re < 1, the bubbles behave as individual spheres in a fluidized state of the interface between the spherical bubbles, and thus Stokes formula is well adapted. It is also known that the results of experiments using distilled water and tap water substantially agree with values calculated by the Stokes formula. Hence, the speed at which the bubbles are moved upward in water is calculated as shown in a table below. In other words, in terms of time, bubbles (nano-bubbles) whose diameters are equal to or less than 1 µm are held in position without being floated. Thus, bubbles which do not have buoyancy and whose diameters are equal to or less than 1 µm are suitable for continuously supplying the fine bubbles at a stable concentration to the individual fish and shellfish which cannot move under anesthesia.

**[Table 1]**

| Bubble diameter | Speed at which bubbles are moved upward in water |
|---|---|
| 100 µm | 5440 µm/s |
| 10 µm | 54.4 µm/s ≅ 19.6 cm/h |
| 1 µm | 0.544 µm/s ≅ 2 mm/h |

In the gill portion of fish and shellfish in contact with the fine bubbles, the movement of diffusion of oxygen is performed by a partial pressure difference between [gaseous oxygen partial pressure] - [gill capillary dissolved oxygen partial pressure]. The amount of oxygen taken by the gill thin plate capillary is varied according to a diffusion coefficient depending on the diameter (pressure within the bubble) of the fine bubble in contact with the surface of a membrane of gill epithelial cells and the number thereof, a larger number of smaller bubbles make contact with the surface of the membrane of gill epithelial cells and thus the amount of oxygen taken by the gill thin plate capillary is increased. A relationship between the diameter of the bubble in water and the pressure within the bubble can be expressed by the formula of Young - Laplace, and the relationship is given by "ΔP = 4σ/d." Here, it is assumed that the surface tension of water σ = 72.8 mN/m (20°C) and that the pressure around the bubble is 1 atm, the following are provided.

**[Table 2]**

| Bubble diameter | Pressure within bubble (atm) |
|---|---|
| 1 mm | 1.003 |
| 100 µm | 1.03 |
| 10 µm | 1.29 |
| 1 µm | 3.9 |
| 500 nm | 5.8 |
| 300 nm | 9.7 |
| 200 nm | 14.6 |
| 100 nm | 29.7 |

Specifically, in order to raise the rate of diffusion of oxygen to increase the amount of oxygen taken by the gill thin plate capillary, it is preferable to increase the partial pressure difference between [gaseous oxygen partial pressure] - [gill capillary dissolved oxygen partial pressure]. Hence, as the diameter of the fine bubble is lower, the efficiency is exponentially enhanced. Since the number of fine bubbles that can make contact with the surface of the membrane of gill epithelial cells is realistically limited to some extent, it can be considered that the fine bubbles whose particle diameters are less than 300 nm and in which the partial pressure difference between [gaseous oxygen partial pressure] - [gill capillary dissolved oxygen partial pressure] is equal to or more than 10 times have the remarkable effect of increasing the total amount of oxygen taken by the gill thin plate capillary.

Next, examples which were performed so as to confirm the action effects of the present invention will be described.

### <Example 1: Confirmation of anesthesia limit time when carbon dioxide anesthesia was performed on fish and shellfish at a water temperature of 20°C>

It is known that when carbon dioxide anesthesia is performed on fish and shellfish under a water temperature (around 20°C) at which normal fish and shellfish are treated, sudden death occurs in a very short period of time even under saturated dissolved oxygen. The limit time of anesthesia was confirmed with an experiment. The types of and the number of individual fish and shellfish on which the experiment was performed are shown in table 3. A water temperature within a water tank of 700 L for the experiment was adjusted to be 20°C, and a normal air pump and a normal air stone were used to maintain the dissolved oxygen (DO) of the sea water within the water tank in a saturated state. Under the saturated dissolved oxygen, carbon dioxide was passed into the water, the concentration of dissolved carbon dioxide was raised at a rate of increase of 0.5% per minute and the concentration was increased until the fish and shellfish were anesthetized. The time when a state where no swimming behavior was performed and where the movement of the body other than the respiratory movement of the gill portion was stopped was confirmed with a monitor camera was evaluated to be the start of anesthesia. Thereafter, a concentration which was slightly higher than the concentration of carbon dioxide at which the fish and shellfish was anesthetized was maintained, and anesthesia was continued. The individual in which the activity of the gill portion was stopped was pulled up, and the sudden death thereof was confirmed every 5 minutes. Consequently, all the individuals encountered sudden death within 30 minutes after anesthesia, and the processes thereof are as shown in table 4. The concentration of carbon dioxide in the water was measured with a CGP-31-type carbon dioxide concentration meter made by DKK-TOA Corporation and was represented by v/v%.

**[Table 3]**

| Fish and shellfish subjected to experiment | Number of individuals |
|---|---|
| Bigfin reef squid (Sepioteuthis lessoniana) | 2 |
| Slender grouper (Anyperodon leucogrammicus) | 2 |
| Chicken grunt (Parapristipoma trilineatum) | 2 |
| Japanese horse mackerel (Trachurus japonicus) | 2 |
| Red seabream (Pagrus major) | 2 |

**[Table 4]**

| Fish and shellfish | Individual No. | Concentration* of CO₂ when anesthetic effect appeared (%) | Concentration* of CO₂ when anesthesia was maintained (%) | Time when sudden death was confirmed (anesthesia limit time) |
|---|---|---|---|---|
| Bigfin reef squid | No. 1 | 5.3 | 7.0 | After 10 minutes |
| | No. 2 | 4.2 | | After 15 minutes |
| Slender grouper | No. 1 | 6.8 | 8.0 | After 10 minutes |
| | No. 2 | 5.8 | | After 20 minutes |
| Chicken grunt | No. 1 | 4.0 | 5.0 | After 10 minutes |
| | No. 2 | 2.9 | | After 10 minutes |
| Japanese horse mackerel | No. 1 | 4.3 | 7.0 | After 10 minutes |
| | No. 2 | 6.0 | | After 15 minutes |
| Red seabream | No. 1 | 8.9 | 10.0 | After 25 minutes |
| | No. 2 | 7.3 | | After 15 minutes |

| | | | | |
|---|---|---|---|---|
| * Note: Carbon dioxide concentration when the depth of anesthesia (= paralyses of a thalamus, a subcortical nuclei and a spinal cord) corresponding to the first phase to the second phase in the third period of anesthesia in the general anesthesia of a human was observed. | | | | |

### <Example 2: Confirmation of concentration of carbon dioxide when anesthetic effect appeared on fish and shellfish>

The types of and the number of individual fish and shellfish on which the experiment was performed are shown in table 6. A water temperature within a water tank of 700 L for the experiment was adjusted to be 20°C, a fine bubble generating device was used to continuously supply, to the water tank, the fine bubbles of particle diameter distribution shown in table 5, carbon dioxide was passed into the water, the concentration of dissolved carbon dioxide was raised at a rate of increase of 0.5% per minute and the concentration was increased until the fish and shellfish were anesthetized. The time when a state where no swimming behavior was performed and where the movement of the body other than the respiratory movement of the gill portion was stopped was confirmed with a monitor camera was evaluated to be the start of anesthesia. Thereafter, when a concentration was reached that was slightly higher than the concentration of carbon dioxide at which the fish and shellfish were anesthetized, the supply of carbon dioxide was stopped, gaseous oxygen was passed immediately after that to remove the carbon dioxide from the water tank, the concentration of carbon dioxide was gradually lowered at a rate of reduction of 1%/30 minutes and thus the fish and shellfish were awakened from anesthesia. Consequently, all the types of fish and shellfish on which the experiment was performed were normally awakened, and individuals in which an abnormality was observed visually 6 hours after the awakening were not recognized. In other words, it has been clear that prolonged carbon dioxide anesthesia can be performed, on a wide range of fish and shellfish, under a water temperature (around 20°C) at which normal fish and shellfish are treated, and the processes thereof are as shown in table 7. With respect to bigfin reef squids, one out of three was triggered by an excited state in the early stage of anesthesia to vomit ink, and thus the experiment was temporarily stopped and the results of a re-experiment which was then performed after water replacement on the same individual are shown. In order to completely prevent a reaction in which when squid are anesthetized, ink is triggered by a mild excited state appearing in the early stage of anesthesia to be vomited, it is necessary to find a method for raising the concentration of carbon dioxide to reduce the excitement in an anesthesia induction period.

**[Table 5]**

| | |
|---|---|
| Average particle diameter (Mean) | 187 nm |
| Mode | 136 nm |
| Standard deviation (SD) | 42 nm |
| Total concentration | 42 million pieces or more/ml |

**[Table 6]**

| Fish and shellfish subjected to experiment | Number of individuals | Body weight |
|---|---|---|
| Bigfin reef squid | 3 | About 500 g |
| Slender grouper | 3 | About 450 g |
| Chicken grunt | 3 | About 500 g |
| Japanese horse mackerel | 3 | About 400 g |
| Red seabream | 3 | About 550 g |

**[Table 7]**

| Fish and shellfish | Individual No. | Concentration* of CO₂ when anesthetic effect appeared | Concentration of CO₂ when supply was stopped | Time until awakening (anesthesia time) | Remarks 6 hours after awakening |
|---|---|---|---|---|---|
| Bigfin reef squid | No. 1 | 5.8 | 7.0 | 30 minutes | No abnormality |
| | No. 2 | 4.4 | | 60 minutes | No abnormality |
| | No. 3 | 5.0 | | 70 minutes | No abnormality |
| Slender grouper | No. 1 | 7.0 | 8.0 | 120 minutes | No abnormality |
| | No. 2 | 5.3 | | 160 minutes | No abnormality |
| | No. 3 | 6.8 | | 140 minutes | No abnormality |
| Chicken grunt | No. 1 | 4.1 | 5.0 | 100 minutes | No abnormality |
| | No. 2 | 4.0 | | 120 minutes | No abnormality |
| | No. 3 | 3.0 | | 130 minutes | No abnormality |
| Japanese horse mackerel | No. 1 | 6.0 | 7.0 | 90 minutes | No abnormality |
| | No. 2 | 5.6 | | 120 minutes | No abnormality |
| | No. 3 | 5.0 | | 110 minutes | No abnormality |
| Red seabream | No. 1 | 8.6 | 10.0 | 40 minutes | No abnormality |
| | No. 2 | 8.2 | | 90 minutes | No abnormality |
| | No. 3 | 9.3 | | 80 minutes | No abnormality |

### <Example 3: Verification experiment of prolonged anesthesia using carbon dioxide>

Five chicken grunts having a weight of about 450 g were used for an experiment. A water temperature within a water tank of 700 L for the experiment was adjusted to be 20°C, a fine bubble generating device was used to continuously supply, to the water tank, the fine bubbles of particle diameter distribution shown in table 5, carbon dioxide was passed into the water, the concentration of dissolved carbon dioxide was raised to 5% and the chicken grunts were anesthetized. When the concentration of the dissolved carbon dioxide reached 5%, it was confirmed with a monitor camera that all the individuals were in a state where no swimming behavior was performed and where the movement of the body other than the respiratory movement of the gill portion was stopped. Thereafter, the concentration of carbon dioxide was maintained in a range of 5.0 to 4.5%, and anesthesia was performed for 20 minutes. After anesthesia, gaseous oxygen was passed to remove the carbon dioxide from the water tank, the concentration of carbon dioxide was gradually lowered at a rate of 1%/30 minutes and thus the chicken grunts were awakened from anesthesia. In 2 to 3 hours during which the concentration of the carbon dioxide was sufficiently lowered, all the individuals on which the experiment was performed were normally awakened, and abnormal individuals were not recognized 24 hours after the awakening. In other words, it has been verified that dissolved carbon dioxide and nano-sized bubbles containing gaseous oxygen are supplied at the same time, and thus it is possible to perform safe and prolonged anesthesia on fish and shellfish under a water temperature (around 20°C) which is normally treated. The processes thereof are as shown in table 8.

**[Table 8]**

| Fish and shellfish | Individual No. | Concentration* of CO₂ when anesthetic effect appeared | Concentration of CO₂ at which anesthesia was maintained | Concentratio n of CO₂ at the time of awakening | Remarks 24 hours after awkening |
|---|---|---|---|---|---|
| Parapristip oma trilineatum | No. 1 | 2.8 | 5.0 | 1.2 | No abnormality |
| | No. 2 | 3.8 | | 1.8 | No abnormality |
| | No. 3 | 3.0 | | 1.2 | No abnormality |
| | No. 4 | 3.4 | | 1.2 | No abnormality |
| | No. 5 | 4.2 | | 2.0 | No abnormality |

### Industrial Applicability

According to the present invention, it is possible to perform long-time and long-distance transport of fish and shellfish which are tranquilized by anesthesia. Since the physiological and metabolic activity of the fish and shellfish tranquilized by anesthesia is lowered, it is possible to suppress the degradation of water quality caused by the discharge of waste and to enhance a loading ratio within a limited water tank. By a novel anesthetic technology in which after safe and prolonged anesthesia is performed on fish and shellfish, then they were awakened again and thus they can swim as live fish, even in the transport means of any one of land, air and sea, it is possible to transport fish and shellfish over a long distance which is conventionally regarded as impossible. In an aquaculture site of fish or the like, in various cases such as when vaccination for disease prevention is performed and when the teeth of tiger puffers are cut so that they are prevented from biting each other, the present invention can be used so as to tranquilize fish to prevent damage and exhaustion of fish bodies.

## Claims

1. A method for anesthetizing fish and shellfish, the method comprising:
a step of generating, in water, a high concentration of carbon dioxide having an anesthetic effect for fish and shellfish as targets; and
a step of supplying a fine bubble containing gaseous oxygen into the water.

2. The method for anesthetizing fish and shellfish according to Claim 1, the method further comprising:
a step of supplying the fine bubble containing gaseous oxygen so as to bring the fine bubble into contact with a gill of the fish and shellfish.

3. The method for anesthetizing fish and shellfish according to Claim 2, the method further comprising:
a step of supplying the fine bubble containing gaseous oxygen so as to bring the fine bubble into contact with a surface of a gill epithelial cell membrane of the fish and shellfish.

4. The method for anesthetizing fish and shellfish according to any one of Claims 1 to 3,
wherein a particle diameter of the fine bubble containing gaseous oxygen is equal to or less than 1 µm.

5. The method for anesthetizing fish and shellfish according to any one of Claims 1 to 3,
wherein a mode of a particle diameter of the fine bubble containing gaseous oxygen is equal to or less than 300 nm.

6. The method for anesthetizing fish and shellfish according to any one of Claims 1 to 5,
wherein the fine bubble containing gaseous oxygen is supplied at a density of 40 million pieces/ml or more.

7. A device which anesthetizes fish and shellfish and which performs the method according to any one of Claims 1 to 6, the device comprising:
a water tank in which the fish and shellfish as targets are stored;
a means which supplies carbon dioxide into the water tank; and
a means which supplies a fine bubble containing gaseous oxygen into the water tank.

## Amended claims

### Amended claims under Art. 19.1 PCT

**1.** (Amended) A method for anesthetizing fish and shellfish, the method comprising:
a step of generating, in water, a concentration of carbon dioxide eliciting an anesthetic effect for fish and shellfish as targets; and
a step of supplying a fine bubble containing gaseous oxygen which has such a size that a position is held without being floated in the water.

**2.** (Amended) The method for anesthetizing fish and shellfish according to Claim 1, the method further comprising:
a step of supplying the fine bubble containing gaseous oxygen to a gill of an individual fish and shellfish which cannot be moved in the water under anesthesia.

**3.** (Amended) The method for anesthetizing fish and shellfish according to Claim 2, the method further comprising:
a step of supplying the fine bubble containing gaseous oxygen to a surface of a gill epithelial cell membrane of the individual fish and shellfish which cannot be moved in the water under anesthesia.

**4.** The method for anesthetizing fish and shellfish according to any one of Claims 1 to 3,
wherein a particle diameter of the fine bubble containing gaseous oxygen is equal to or less than 1 µm.

**5.** The method for anesthetizing fish and shellfish according to any one of Claims 1 to 3,
wherein a mode of a particle diameter of the fine bubble containing gaseous oxygen is equal to or less than 300 nm.

**6.** The method for anesthetizing fish and shellfish according to any one of Claims 1 to 5,
wherein the fine bubble containing gaseous oxygen is supplied at a density of 40 million pieces/ml or more.

**7.** (Amended) A device which anesthetizes fish and shellfish and which performs the method according to any one of Claims 1 to 6, the device comprising:
a water tank in which the fish and shellfish as targets are stored;
a means which supplies carbon dioxide into the water tank; and
a means which supplies a fine bubble containing gaseous oxygen which has such a size that a position is held without being floated in water within the water tank.
